(19) Europäisches Patentamt
European Patent Office
Office européen des brevets

(11) **EP 3 594 900 A1**

(12) **EUROPEAN PATENT APPLICATION**

(43) Date of publication:
**15.01.2020 Bulletin 2020/03**

(51) Int Cl.:
**G06T 7/20** (2017.01)

(21) Application number: **19185049.4**

(22) Date of filing: **08.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.07.2018 EP 18305915**

(71) Applicant: **InterDigital CE Patent Holdings
75017 Paris (FR)**

(72) Inventors:
• **CRIVELLI, Tomas Enrique
35576 Cesson-Sevigne (FR)**
• **SIROT, Joel
35576 Cesson-Sevigne (FR)**
• **STAUDER, Jurgen
35576 Cesson-Sevigne (FR)**

(74) Representative: **Ståhl, Björn Niclas
InterDigital CE Patent Holdings
20, rue Rouget de Lisle
92130 Issy-les-Moulineaux (FR)**

(54) **TRACKING AN OBJECT IN A SEQUENCE OF PANORAMIC IMAGES**

(57)    A method of tracking an object in a sequence of panoramic images and an apparatus and a computer program code suitable for implementing the method are described. For obtaining a current position of an object in a current panoramic image of a sequence of panoramic images, first an initial 2D position of the object in a preceding panoramic image is obtained (10). The initial 2D position is then projected (11) back into 3D space to obtain an initial 3D position. Then a set of candidate 3D motion vectors is obtained (12) based on the initial 3D position. The initial 3D position is subsequently motion compensated (13) using this set of candidate 3D motion vectors to obtain a set of motion compensated 3D positions. The motion compensated 3D positions are then projected (14) into a set of candidate 2D positions.

Obtain initial 2D position of object in preceding panoramic image — 10

Back-project initial 2D position into 3D space to obtain initial 3D position — 11

Obtain set of potential 3D motion vectors — 12

Motion compensate initial 3D position using potential 3D motion vectors — 13

Project motion compensated 3D positions into set of potential 2D positions — 14

Obtain position of object in current panoramic image by matching pixels — 15

FIG. 1

EP 3 594 900 A1

**Description**

TECHNICAL FIELD

The present principles relate to a method of tracking an object in a sequence of panoramic images. The present principles further relate to an apparatus and a computer program code suitable for implementing the method of tracking an object in a sequence of panoramic images.

BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Cameras with short focal length and wide angular field use either wide-angle lenses or fisheye lenses. In both cases they are capable of capturing broad areas of view. Wide-angle lenses are rectilinear, while fisheye lenses are not. The latter deliver distorted images, which exhibit a so called barrel distortion.

Projections of a panorama onto a 2D image plane include equirectangular, cylindrical, rectilinear, fisheye, Mercator, sinusoidal and stereographical projections.

For processing of sequences of panoramic images, e.g. for color grading of virtual reality or VR image sequences, it is helpful to track objects in those image sequences. VR images often use an equirectangular panoramic image representation.

The term tracking here refers to non-pixel-precise tracking of objects in a sequence of panoramic images. Non-pixel-precise tracking, as opposed to pixel-precise or even subpixel-precise tracking, does not employ a precise segmentation of the object. Instead, object mapping identifies the object either by a specific typical part of the object, for example a texture or a marker, or by a rough segmentation, such as a rectangle that includes the majority of the object.

In the article by Rameau et al.: "Visual tracking with omnidirectional cameras: an efficient approach", Electronics Letters Vol. 47 (2011), pp.1183-1184, non-pixel-precise tracking in omnidirectional images is discussed. Two known approaches for non-pixel-precise tracking, namely mean-shift and particle filter, to omnidirectional images. While traditional tracking in traditional perspective images uses rectangular search windows in two-dimensional image coordinates, the authors propose to use a window defined on the spherical globe, which is rectangular in the coordinate system of latitude and longitude. This window is then projected into the image plane of the omnidirectional image, resulting in a non-rectangular search window.

SUMMARY

In a first aspect, a method of tracking an object in a sequence of panoramic images is described. The method comprises:

- obtaining an initial 2D position of the object in a preceding panoramic image;
- back-projecting the initial 2D position into 3D space to obtain an initial 3D position;
- obtaining a set of candidate 3D motion vectors based on the initial 3D position;
- motion compensating the initial 3D position using the set of candidate 3D motion vectors to obtain a set of motion compensated 3D positions;
- projecting the motion compensated 3D positions into a set of candidate 2D positions; and
- obtaining a position of the object in a current panoramic image by matching pixels of the preceding panoramic image at the initial 2D position and pixels of the current panoramic image at a candidate 2D position.

In a second aspect, an apparatus for tracking an object in a sequence of panoramic images is described. The apparatus comprises:

- means for obtaining an initial 2D position of the object in a preceding panoramic image;
- means for back-projecting the initial 2D position into 3D space to obtain an initial 3D position;
- means for obtaining a set of candidate 3D motion vectors based on the initial 3D position;
- means for motion compensating the initial 3D position using the set of candidate 3D motion vectors to obtain a set of motion compensated 3D positions;
- means for projecting the motion compensated 3D positions into a set of candidate 2D positions; and
- means for obtaining a position of the object in a current panoramic image by matching pixels of the preceding panoramic image at the initial 2D position and pixels of the current panoramic image at a candidate 2D position.

In a third aspect, a computer program code comprises instructions, which, when executed by at least one processor, cause the at least one processor to:

- obtain an initial 2D position of the object in a preceding panoramic image;
- back-project the initial 2D position into 3D space to obtain an initial 3D position;
- obtain a set of candidate 3D motion vectors based on the initial 3D position;
- motion compensate the initial 3D position using the set of candidate 3D motion vectors to obtain a set of motion compensated 3D positions;
- project the motion compensated 3D positions into a set of candidate 2D positions; and
- obtain a position of the object in a current panoramic image by matching pixels of the preceding panoramic image at the initial 2D position and pixels of the current panoramic image at a candidate 2D position.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

BRIEF DESCRIPTION OF THE DRAWINGS

The proposed method and apparatus is best understood from the following detailed description when read in conjunction with the accompanying drawings. The drawings include the following figures briefly described below:

FIG. 1 illustrates a flowchart of an exemplary method of tracking an object in a sequence of panoramic images in accordance with an embodiment of the present disclosure.

FIG. 2 illustrates an exemplary apparatus for tracking an object in a sequence of panoramic images in accordance with an embodiment of the present disclosure.

FIG. 3 illustrates an exemplary apparatus for tracking an object in a sequence of panoramic images in accordance with a further embodiment of the present disclosure.

FIG. 4 illustrates projections of an object in a sequence of panoramic fisheye images for a first direction of movement.

FIG. 5 illustrates projections of an object in a sequence of panoramic fisheye images for a second direction of movement.

FIG. 6 illustrates projections of an object in a sequence of panoramic equirectangular images for a first direction of movement.

FIG. 7 illustrates projections of an object in a sequence of panoramic equirectangular images for a second direction of movement.

It should be understood that the drawings are for purposes of illustrating the concepts of the disclosure and are not necessarily the only possible configuration for illustrating the disclosure.

DETAILED DESCRIPTION

All examples and conditional language recited herein are intended for educational purposes to aid the reader in understanding the principles of the disclosure and the concepts contributed by the inventor to furthering the art and are to be construed as being without limitation to such specifically recited examples and conditions.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It will be appreciated by those skilled in the art that the flow diagrams represent various processes, which may be executed by a computer or processor, whether or not, such computer or processor is explicitly shown. Similarly, it will be appreciated that the block diagram presented herein represents a conceptual view of an illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function.

In the following a brief introduction into fisheye and equirectangular image projections shall be given. It is to be understood that the present principles are not limited to these types of projection, as similar problems arise when other types of projections are used.

A (hemispherical) fisheye image, also called omnidirectional image, is a parallel projection of a unit hemisphere onto a plane. The resulting image will be circular. The widest view angle, horizontally and vertically, is 180 degrees, with extreme distortion at $\pm$ 90 degrees.

Equirectangular image projections map the latitude and longitude coordinates of a spherical globe directly onto horizontal and vertical coordinates of a grid, where this grid is roughly twice as wide as it is tall. Horizontal stretching, therefore, increases towards the poles, with the north and south poles being stretched across the entire upper and lower edges of the flattened grid. Equirectangular projections can show the entire vertical and horizontal angle of view up to 360 degrees.

For equirectangular image projections, 3D coordinates $(X, Y, Z)$ are first transformed into latitude $\lambda$ and longitude $\varphi$ and then into image coordinates.

The transformation of 3D coordinates into latitude $\lambda$ and longitude $\varphi$ is defined according to:

$$\lambda = \mathrm{atan2}(Y, X) \tag{1}$$

$$\varphi = \mathrm{atan}\left(\frac{Z}{\sqrt{X^2 + Y^2}}\right). \tag{2}$$

Then, the latitude $\lambda$ and longitude $\varphi$ of a spherical globe are mapped to image coordinates $x, y$ as follows:

$$x = \cos(\varphi_0) \cdot (\lambda - \lambda_0) \tag{3}$$

$$y = \varphi - \varphi_0 , \tag{4}$$

with $\lambda_0$ and $\varphi_0$ being the latitude and longitude corresponding to the center of the image, respectively. The inverse projection then is as follows:

$$\lambda = \frac{x}{\cos(\varphi_0)} + \lambda_0 \tag{5}$$

$$\varphi = y + \varphi_0 . \tag{6}$$

If the image center corresponds to the equator of the sphere, $\lambda_0 = \varphi_0 = 0$ holds and the equations simplify to:

$$x = \lambda \qquad\qquad (5)$$

$$y = \varphi \,. \qquad\qquad (6)$$

In an embodiment, a method of tracking an object in a sequence of panoramic images comprises:

- obtaining an initial 2D position of the object in a preceding panoramic image;
- back-projecting the initial 2D position into 3D space to obtain an initial 3D position;
- obtaining a set of candidate 3D motion vectors based on the initial 3D position;
- motion compensating the initial 3D position using the set of candidate 3D motion vectors to obtain a set of motion compensated 3D positions;
- projecting the motion compensated 3D positions into a set of candidate 2D positions; and
- obtaining a position of the object in a current panoramic image by matching pixels of the preceding panoramic image at the initial 2D position and pixels of the current panoramic image at a candidate 2D position.

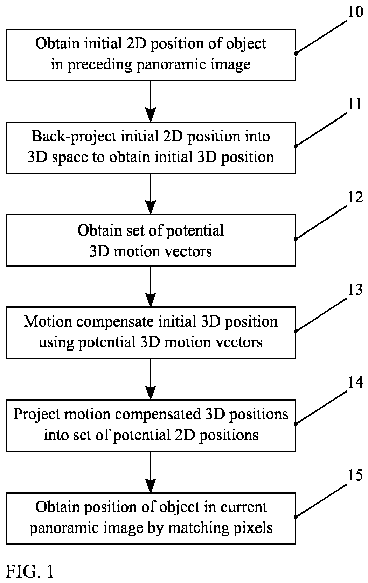

Turning now to FIG. 1, a flowchart of an exemplary method of tracking an object in a sequence of panoramic images is shown. For obtaining a current position of an object in a current panoramic image of a sequence of panoramic images a sequence of steps is performed. First the initial 2D position of the object in a preceding panoramic image before object motion is obtained 10. The initial 2D position is then projected 11 back into 3D space. The result of this step is an initial 3D position. Starting from this initial 3D position a set of candidate 3D motion vectors is obtained 12. The initial 3D position is subsequently motion compensated 13 using this set of candidate 3D motion vectors. The motion compensated 3D positions are then projected 14 into a set of candidate 2D positions. Finally, the position of the projected object in the current panoramic image is obtained 15 by searching the best match of pixels of the preceding panoramic image at the initial 2D position and pixels of the current panoramic image at a candidate 2D position.

The method according to the present principles has the advantage that it operates in the image plane and does not require any additional image memory or image transformations. In addition, it can use any type of search window. Furthermore, the method can use search windows defined directly in the image plane.

In an embodiment, an apparatus for tracking an object in a sequence of panoramic images comprises:

- means for obtaining an initial 2D position of the object in a preceding panoramic image;
- means for back-projecting the initial 2D position into 3D space to obtain an initial 3D position;
- means for obtaining a set of candidate 3D motion vectors based on the initial 3D position;
- means for motion compensating the initial 3D position using the set of candidate 3D motion vectors to obtain a set of motion compensated 3D positions;
- means for projecting the motion compensated 3D positions into a set of candidate 2D positions; and
- means for obtaining a position of the object in a current panoramic image by matching pixels of the preceding panoramic image at the initial 2D position and pixels of the current panoramic image at a candidate 2D position.

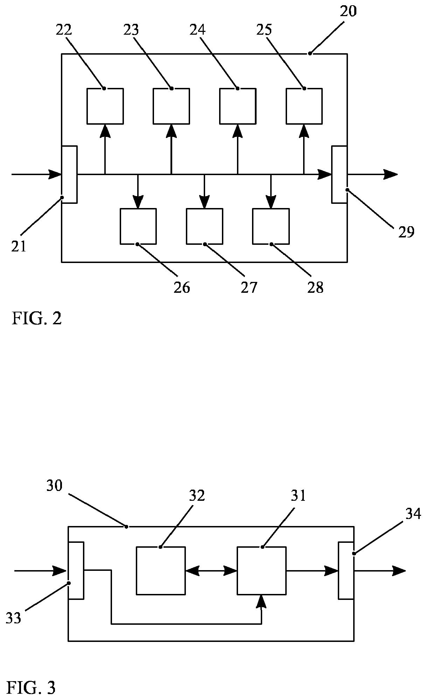

A block diagram of a first embodiment of an apparatus 20 for tracking an object in a sequence of panoramic images is illustrated in FIG. 2.

The apparatus 20 has an input 21 for obtaining a sequence of panoramic images, e.g. from a network or an external storage system. The sequence of panoramic images may likewise be obtained from a local storage unit 22. A 2D position obtaining unit 23 obtains an initial 2D position of the object in a preceding panoramic image. A back-projecting unit 24 back-projects the initial 2D position into 3D space to obtain an initial 3D position. A 3D motion vector obtaining unit 25 obtains a set of candidate 3D motion vectors based on the initial 3D position. A motion compensating unit 26 motion compensates the initial 3D position using the set of candidate 3D motion vectors to obtain a set of motion compensated 3D positions. A projecting unit 27 projects the motion compensated 3D positions into a set of candidate 2D positions. A position obtaining unit 28 the obtains a position of the object in a current panoramic image by matching pixels of the preceding panoramic image at the initial 2D position and pixels of the current panoramic image at a candidate 2D position.

The object tracking result is preferably made available via an output 29. It may also be stored on the local storage unit 22. The output 29 may also be combined with the input 21 into a single bidirectional interface. The different units 23, 24, 25, 26, 27, 28 can be embodied as dedicated hardware units. Of course, the different units 23, 24, 25, 26, 27, 28 may likewise be fully or partially combined into a single unit or implemented as software running on a processor.

A block diagram of a second embodiment of an apparatus 30 for tracking an object in a sequence of panoramic images is illustrated in FIG. 3.

The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment according to the present principles, said adaptation comprises that the processor is configured, e.g. programmed, to perform steps according to one of the described methods.

A processor as used herein may include one or more processing units, such as microprocessors, digital signal processors, or a combination thereof.

The local storage unit 22 and the memory device 32 may include volatile and/or nonvolatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

In an embodiment, a computer program code comprises instructions, which, when executed by at least one processor, cause the at least one processor to perform the method according to the present principles.

In an embodiment, a set of initial 3D positions is obtained by back-projecting the initial 2D position into 3D space, reflecting the uncertainty of back-projecting from 2D to 3D. In this case, the set of initial 3D positions is motion compensated using the set of candidate 3D motion vectors to obtain a set of motion compensated 3D positions. If the set of initial 3D positions contains $N_1$ initial 3D positions and the set of candidate 3D motion vectors contains $N_2$ candidate 3D motion vectors, the set of motion compensated 3D positions will contain $N_1 \cdot N_2$ 3D positions.

In an embodiment, the position of the projected object may include at least one of image position, depth, size, shape. The image position may be described by $x, y$ image coordinates. The depth may be described by a $z$ coordinate. The size and shape may be described by an englobing, deformed rectangle.

In an embodiment, matching pixels of the preceding panoramic image at the initial 2D position and pixels of the current panoramic image at a candidate 2D position is performed using image-based 2D displacement or by directly matching pixels in the preceding panoramic image at the initial 2D position with pixels in the current panoramic image at a candidate 2D position.

In an embodiment, matching pixels of the preceding panoramic image at the initial 2D position and pixels of the current panoramic image at a candidate 2D position using image-based 2D displacement comprises:

- performing a 2D displacement of a portion of the preceding panoramic image at the initial 2D position to one of the candidate 2D positions to obtain a compensated portion;
- matching the compensated portion against the current panoramic image; and
- selecting a best matching candidate 2D position as the position of the projected object in the current panoramic image.

The matching for obtaining the position of the projected object in the current panoramic image can be realized, for example, using image-based 2D displacement. For this purpose 2D displacement vectors can be used in the image plane for 2D displacement of a portion of the preceding panoramic image at the initial 2D position to one of the candidate 2D positions, which results in a compensated portion. Interpolation of 2D positions may be used if the 2D displacement does not lead to 2D integer pixel positions. The compensated portion is then matched against the current panoramic image. 2D warping may be applied to the portion of the preceding panoramic image before matching. Finally, the best matching candidate 2D position is chosen as the position of the projected object in the current panoramic image.

For matching, a matching distance can be defined between 2D displaced pixels of the preceding panoramic image and pixels in the current panoramic image, for example based on square error or based on correlation. The best match is the match having the smallest matching distance.

Matching may also be realized without image-based 2D displacement. For example, pixels in the preceding panoramic image at the initial 2D position may be directly matched with pixels in the current panoramic image at a candidate 2D position. A matching distance can be defined between pixels in the preceding panoramic image at the initial 2D position and pixels in the current panoramic image at a candidate 2D position based on principles such as in known methods such as mean-shift and particle filter.

In an embodiment, the method is applied in parallel to a series of successive panoramic images by obtaining a series of initial 3D positions for the series of successive panoramic images and obtaining a series of sets of candidate 3D motion vectors.

In an embodiment, the candidate 3D motion vectors are obtained such that a series of corresponding candidate 3D motion vectors of the sets of candidate 3D motion vectors form a physical motion trajectory in 3D space. The advantage is that a uniformity constraint of a physical motion trajectory can be applied to the series of sets of candidate 3D motion vectors in parallel to matching in the 2D image. In this case, the best match is the match having the smallest matching distance and the series of sets of candidate 3D motion vectors corresponding best to a uniform, physical 3D motion trajectory.

The method may be applied in parallel to a series of successive panoramic images instead of a single current panoramic image. In this case a corresponding series of initial 3D positions is obtained for the series of successive panoramic images, i.e. one initial 3D position per panoramic image. Once the series of initial 3D positions is available, a series of sets of candidate 3D motion vectors is obtained. A set of candidate 3D motion vectors may comprise a plurality of members. For example, the first set of candidate 3D motion vectors comprises the motion vectors $m_{11}, m_{12}, ..., m_{1n}$, the second set of candidate 3D motion vectors comprises the motion vectors $m_{21}, m_{22}, ..., m_{2n}$, and so on. The candidate 3D motion vectors are obtained such that any series of corresponding members of the sets of candidate 3D motion vectors form a physical motion trajectory in 3D space. Finally, a series of positions of the projected object is obtained for the series of successive panoramic images.

Consider the case of $k$ successive panoramic images, which means that there are $k$ sets of candidate 3D motion vectors. One example for a series of corresponding members of the sets of candidate 3D motion vectors is the series of the first members of the sets of candidate 3D motion vectors, i.e. the motion vectors $m_{11}, m_{21}, ..., m_{k1}$. This series of corresponding members of the sets of candidate 3D motion vectors forms a physically meaningful motion trajectory, e.g. a translation, a rotation, or a smooth trajectory like that of a heavy body.

The application of the method in parallel to a series of successive panoramic images has the advantage that it can use search windows corresponding to physical 3D motion, which is likely to find better matches.

In an embodiment, a set of different projection models is used when the initial 2D position is back-projected into 3D space and when the motion compensated 3D positions are projected into a set of candidate 2D positions.

A set of different projection models may be used when the initial 2D position is projected back into 3D space and when the motion compensated 3D positions are projected into a set of candidate 2D positions. For example, the different projection models may be a fisheye and an equirectangular projection model. The solution in accordance with this embodiment is able to cope with panoramic images where the type of camera is unknown. In this embodiment, the generated set of candidate 2D positions contains candidate 2D positions that differ in the type of the projection that has been used. Of course, the use of different projection models can also be applied to a series of successive panoramic images instead of a single current panoramic image.

The use of different projection models has the advantage that it allows tracking objects in panoramic images of unknown camera type.

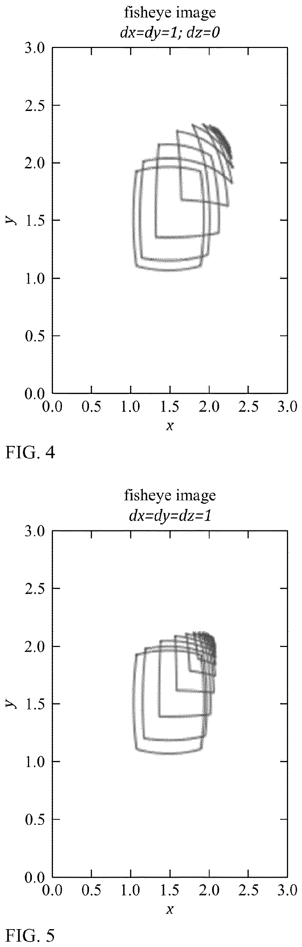

To give an example, FIG. 4 illustrates projections of an object in a sequence of panoramic fisheye images for a first direction of movement. This movement is to be understood in 3D space. Shown is a series of candidate 2D positions corresponding to a set of motion vectors. In this example the object motion is parallel to the image plane in the direction ($dx, dy, dz$) with $dx = dy = 1$, with the depth z being constant.

FIG. 5 illustrates projections of an object in a sequence of panoramic fisheye images for a second direction of movement. Shown is a series of candidate 2D positions corresponding to a set of motion vectors. In this example the object motion is a 3D motion in the direction ($dx, dy, dz$) with $dx = dy = dz = 1$.

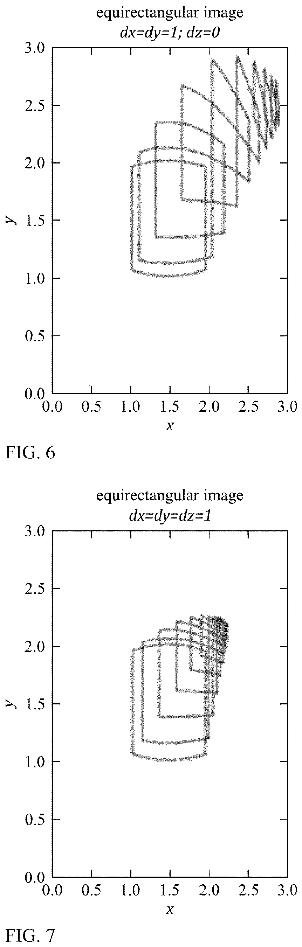

FIG. 6 illustrates projections of an object in a sequence of panoramic equirectangular images for a first direction of movement. Shown is a series of candidate 2D positions corresponding to a set of motion vectors. In this example the object motion is again parallel to the image plane in the direction ($dx, dy, dz$) with $dx = dy = 1$, with the depth z being constant.

FIG. 7 illustrates projections of an object in a sequence of panoramic equirectangular images for a second direction of movement. Shown is a series of candidate 2D positions corresponding to a set of motion vectors. Similar to FIG. 5, in this example the object motion is a 3D motion in the direction ($dx, dy, dz$) with $dx = dy = dz = 1$.

In an embodiment, obtaining a set of candidate 3D motion vectors and obtaining a position of the object in the current panoramic image by searching the best match are responsive to a viewing direction corresponding to the initial 2D position and to viewing directions corresponding to the candidate 2D positions.

The viewing direction corresponding to a 2D position in a panoramic image is the viewing direction of an observer of the panoramic image when looking to the part of the image corresponding to this 2D position.

In this way, correlations between physical motion of the tracked object and the viewing direction can be considered and treated.

In an embodiment, the object is a face or a head of a character.

For example, consider the head of a moving character in a panoramic motion picture or a video game that always faces the camera, i.e. that looks into the eyes of the observer. In this case the motion of the head not only depends on the motion of the body of the character, but also on the position of the camera, i.e. on the viewing direction of the observer.

In this example, when the face of the character always faces the camera, the size of the set of candidate 3D motion vectors can be reduced. For example, those candidate 3D motion vectors that lead to candidate 2D positions where the head of the character does not face the observer can be excluded.

Additionally, in this embodiment, when matching pixels of the preceding panoramic image at the initial 2D position with pixels of the current panoramic image at a candidate 2D position using image-based 2D displacements, only those 2D displacements may be examined for matching that correspond to a change of scale, excluding other types of deformation, such as tilt. Additionally, matching does not need to cope with outliers caused by 3D deformation or self-occlusion.

In an embodiment, the method further comprises photometrically compensating 2D displaced pixels of the preceding panoramic image in dependence on the viewing directions before searching the best match.

Another possibility of being responsive to the viewing directions is to photometrically compensate 2D displaced pixels of the preceding panoramic image before matching in dependence on the viewing directions. For example, the face of a character moving from the initial 3D position of the preceding panoramic image to the current 3D position of the current panoramic image, while always facing the observer, will change its 3D orientation in a way that is directly dependent on the change of viewing direction. In fact, the principal surface normal of the face is the inverse of the viewing direction. If the direction of illumination in the scene is known, changes of shading in the face of the character can be photometrically compensated before matching. A change of shading is caused by a change of incident illumination on the tracked object due to a change of its principal surface normal. This photometric compensation leads to better matching results, where the resulting best match is closer to the actual 2D position.

In general, the solution of this embodiment allows enhancing the tracking performance by compensating geometrical or photometrical effects in dependence on the viewing direction.

In an embodiment, the method further comprises applying a spatial low pass filter that depends on the viewing direction.

The compensation operator may be a spatial low pass filter that depends on the viewing direction. Since the image resolution is different for different viewing directions, the spatial resolution of the compensated portion can be adapted to that of the current panoramic image at said candidate 2D positions.

In an embodiment, the tracking method is used for color grading. In this embodiment, after tracking, the color of the preceding panoramic image at the initial 2D position is changed. The same color change is then applied to the current panoramic image at the position of the projected object.

This has the advantage that color changes, color grading or color correction can be tracked in panoramic images of panoramic images even if the 3D object motion or the type of projection are not known.

**Claims**

1. A method of tracking an object in a sequence of panoramic images, the method comprising:

   - obtaining an initial 2D position of the object in a preceding panoramic image;
   - back-projecting the initial 2D position into 3D space to obtain an initial 3D position;
   - obtaining a set of candidate 3D motion vectors based on the initial 3D position;
   - motion compensating the initial 3D position using the set of candidate 3D motion vectors to obtain a set of motion compensated 3D positions;
   - projecting the motion compensated 3D positions into a set of candidate 2D positions; and
   - obtaining a position of the object in a current panoramic image by matching pixels of the preceding panoramic image at the initial 2D position and pixels of the current panoramic image at a candidate 2D position.

2. The method according to claim 1, wherein matching pixels of the preceding panoramic image at the initial 2D position and pixels of the current panoramic image at a candidate 2D position is performed using image-based 2D displacement or by directly matching pixels in the preceding panoramic image at the initial 2D position with pixels in the current panoramic image at a candidate 2D position.

3. The method according to claim 2, wherein matching pixels of the preceding panoramic image at the initial 2D position and pixels of the current panoramic image at a candidate 2D position using image-based 2D displacement comprises:

   - performing a 2D displacement of a portion of the preceding panoramic image at the initial 2D position to one of the candidate 2D positions to obtain a compensated portion;
   - matching the compensated portion against the current panoramic image; and
   - selecting a best matching candidate 2D position as the position of the projected object in the current panoramic image.

4. The method according to any of claims 1 to 3, wherein the method is applied in parallel to a series of successive panoramic images by obtaining a series of initial 3D positions for the series of successive panoramic images and obtaining a series of sets of candidate 3D motion vectors.

5. The method according to claim 4, wherein the candidate 3D motion vectors are obtained such that a series of corresponding candidate 3D motion vectors of the sets of candidate 3D motion vectors form a physical motion trajectory in 3D space.

6. The method according to any of claims 1 to 5, wherein a set of different projection models is used when the initial 2D position is back-projected into 3D space and when the motion compensated 3D positions are projected into a set of candidate 2D positions.

7. The method according to any of claims 1 to 5, wherein obtaining a set of candidate 3D motion vectors and obtaining a position of the object in the current frame by searching the best match are responsive to a viewing direction corresponding to the initial 2D position and to viewing directions corresponding to the candidate 2D positions.

8. The method according to claim 7, wherein the object is a face or a head of a character.

9. The method according to claim 7 or 8, further comprising photometrically compensating 2D displaced pixels of the preceding panoramic image in dependence on the viewing directions before searching the best match.

10. The method according to claim 7 or 8, further comprising applying a spatial low pass filter that depends on the viewing direction.

11. The method according to any of the preceding claims, wherein the method is applied to color grading.

12. The method according to any of the preceding claims, wherein the position of the object comprises at least one of image position, depth, size, and shape.

13. The method according to claim 12, wherein size and shape are described by an englobing, deformed rectangle.

14. An apparatus for tracking an object in a sequence of panoramic images, the apparatus comprising:

   - means for obtaining an initial 2D position of the object in a preceding panoramic image;
   - means for back-projecting the initial 2D position into 3D space to obtain an initial 3D position;
   - means for obtaining a set of candidate 3D motion vectors based on the initial 3D position;
   - means for motion compensating the initial 3D position using the set of candidate 3D motion vectors to obtain a set of motion compensated 3D positions;
   - means for projecting the motion compensated 3D positions into a set of candidate 2D positions; and
   - means for obtaining a position of the object in a current panoramic image by matching pixels of the preceding panoramic image at the initial 2D position and pixels of the current panoramic image at a candidate 2D position.

15. A computer program code comprising instructions, which, when executed by at least one processor, cause the at least one processor to perform the method of any of claims 1 to 13.

```
┌─────────────────────────────────┐
│  Obtain initial 2D position of object  │ ── 10
│     in preceding panoramic image       │
└─────────────────────────────────┘
                 │
                 ▼
┌─────────────────────────────────┐
│    Back-project initial 2D position into   │ ── 11
│    3D space to obtain initial 3D position  │
└─────────────────────────────────┘
                 │
                 ▼
┌─────────────────────────────────┐
│        Obtain set of potential         │ ── 12
│           3D motion vectors            │
└─────────────────────────────────┘
                 │
                 ▼
┌─────────────────────────────────┐
│   Motion compensate initial 3D position    │ ── 13
│     using potential 3D motion vectors      │
└─────────────────────────────────┘
                 │
                 ▼
┌─────────────────────────────────┐
│  Project motion compensated 3D positions   │ ── 14
│      into set of potential 2D positions    │
└─────────────────────────────────┘
                 │
                 ▼
┌─────────────────────────────────┐
│    Obtain position of object in current    │ ── 15
│   panoramic image by matching pixels       │
└─────────────────────────────────┘
```

FIG. 1

FIG. 2

FIG. 3

fisheye image
*dx=dy=1; dz=0*

FIG. 4

fisheye image
*dx=dy=dz=1*

FIG. 5

equirectangular image
*dx=dy=1; dz=0*

FIG. 6

equirectangular image
*dx=dy=dz=1*

FIG. 7

Europäisches
Patentamt

European
Patent Office

Office européen
des brevets

# EUROPEAN SEARCH REPORT

Application Number

EP 19 18 5049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/127008 A1 (KANKAANPÄÄ ESA [FI] ET AL) 4 May 2017 (2017-05-04) <br> * paragraph [0003] * <br> * paragraph [0020] - paragraph [0052] * <br> * figures 3a, 3b * | 1-15 | INV. <br> G06T7/20 |
| A | Filiberto Pla ET AL: "Spherical Panoramas for Pan-Tilt Camera Motion Compensation in Space-Variant Images" <br> In: "Topics in Artificial Intelligence", 24 October 2002 (2002-10-24), Springer Berlin Heidelberg, Berlin, Heidelberg, XP055015465, <br> ISBN: 978-3-54-000011-2 <br> vol. 2504, pages 375-387, DOI: 10.1007/3-540-36079-4_33, <br> * abstract * <br> * page 376 - page 382 * | 1-15 | |
| A | US 2016/364912 A1 (CHO HYUN WOO [KR] ET AL) 15 December 2016 (2016-12-15) <br> * abstract * <br> * paragraph [0010] - paragraph [0030] * | 1-15 | |
| A | NOYER J-C ET AL: "Model-based tracking of 3D objects based on a sequential Monte-Carlo method", <br> SIGNALS, SYSTEMS AND COMPUTERS, 2004. CONFERENCE RECORD OF THE THIRTY- EIGHTH ASILOMAR CONFERENCE ON PACIFIC GROVE, CA, USA NOV. 7-10, 2004, PISCATAWAY, NJ, USA,IEEE, <br> vol. 2, 7 November 2004 (2004-11-07), pages 1744-1748, XP010781206, <br> DOI: 10.1109/ACSSC.2004.1399459 <br> ISBN: 978-0-7803-8622-8 <br> * abstract * <br> * page 1745 - page 1746 * | 1-15 | |

TECHNICAL FIELDS
SEARCHED (IPC)

G06T
H04N

The present search report has been drawn up for all claims

| Place of search | Date of completion of the search | Examiner |
|---|---|---|
| Munich | 1 August 2019 | Maier, Werner |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 3 594 900 A1**

## ANNEX TO THE EUROPEAN SEARCH REPORT
## ON EUROPEAN PATENT APPLICATION NO.

EP 19 18 5049

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2019

| Patent document cited in search report | Publication date | Patent family member(s) | Publication date |
|---|---|---|---|
| US 2017127008 A1 | 04-05-2017 | CN 108292364 A<br>EP 3369038 A1<br>US 2017127008 A1<br>US 2019230307 A1<br>WO 2017074821 A1 | 17-07-2018<br>05-09-2018<br>04-05-2017<br>25-07-2019<br>04-05-2017 |
| US 2016364912 A1 | 15-12-2016 | KR 20160147450 A<br>US 2016364912 A1 | 23-12-2016<br>15-12-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAMEAU et al.** Visual tracking with omnidirectional cameras: an efficient approach. *Electronics Letters,* 2011, vol. 47, 1183-1184